# EUROPEAN PATENT SPECIFICATION

(11) **EP 2 555 488 B1**
(45) Date of publication and mention of the grant of the patent: **02.03.2016**
(21) Application number: 11176330.6
(22) Date of filing: 02.08.2011
(51) Int. Cl.: H04L 29/08

(54) **Method of transferring data to a functional application and a user terminal thereto**
Verfahren zur Übertragung von Daten auf eine funktionelle Anwendung und Benutzerendgerät dafür
Procédé de transfert de données vers une application fonctionnelle et terminal utilisateur correspondant

(43) Date of publication of application: 06.02.2013
(73) Proprietor: Teliasonera AB, 106 63 Stockholm (SE)
(72) Inventor: Keisala, Ilkka, FI-02710 Espoo (FI)
(74) Representative: Berggren Oy Ab

(56) References cited:
- EP-A1- 2 071 354
- EP-A1- 2 262 237
- WO-A1-03/055248
- US-A1- 2006 209 740
- US-A1- 2011 150 214

## Description

### TECHNICAL FIELD

The invention concerns in general the technical field of transferring data to a functional application. Especially the invention concerns a utilization of resources of mobile communication network in the context of functional applications.

### BACKGROUND OF THE INVENTION

Modern operating systems in electronic devices have enabled the development of network connected functional applications. The most popular ones are online email applications as well as Internet browser. Lately, the trend has been to introduce small and light-weight functional applications on top of the operating system, which are known with a term of 'widgets'.

A wide variety of functional applications available and one can find such an application basically for any need. A simple example of a functional application is a news widget, which e.g. brings the headlines of the news on the desktop so that a user can see at a glance, what is happening. Widgets can be categorized according to their usage. The most popular category is desktop widgets, which are virtual tools that provide single-purpose services such as showing the user the latest news or the current weather among other things. Second category is mobile widgets which are like desktop widgets, but meant for a mobile phone. Mobile widgets can optimize the features of the widget applications to a mobile phone. Third known category is web widgets. Usually the browsers are used as widget engine infrastructures i.e. the applications run on top of the Internet browser. Also other widget categories are known, but the above mentioned are most common ones. One typical feature of the widgets is that they can be developed quite easily by users since the interface to the operating system is open in most of the cases. Most of the widgets can be created with a few images and with only a limited number of lines of XML/JavaScript/VBScript source code.

Lately, the number of functional applications has increased dramatically especially in the field of smart phones and their operating systems. The competition of the operating systems in smart phones has culminated into the development of applications i.e. widgets. For example, several market places i.e. so called stores offer smart phone users the possibility to acquire functional applications for their mobile terminals for free or against a moderate payment.

As described the functional applications offer users an easy access to information they desire. The piece of information, such as news headline, is normally down-loaded to the terminal over IP (Internet Protocol) by the widget application and the downloading is triggered by widget application. This kind of environment is gener-ally known as a client - server architecture, where the application (i.e. client) takes care of the connection towards the network (application server) and downloads or sends data from or to the network. Downloaded data for widget applications is typically transferred as data packets through data subscriptions of mobile users. Alternatively, a traditional circuit switched network providing data connection service is suitable to widget type applications due to limited amount of data required by widgets.

The functional application server locates normally in Internet and serves the functional applications. For instance, the functional application server is storage for functional applications so that users can download the application from there. Additionally or alternatively, the functional application server can serve as a storage, or middleware, for the data for the functional applications. It can store e.g. the data for the news widget so that the news application in the terminal can download the news information from the server. It can also operate as a linking server for functional applications and service providers so that the functional application in the user terminal connects to a same application server for acquiring an address to another server comprising actually the acquired data.

Document WO 03/055248 published on 03-07-2003 discloses a method for remotely managing a wireless device over the signalling network.

There are several drawbacks of prior art solution relating to the operation of functional applications and especially to the downloading of information for the functional application. If there is no IP based network available at all, e.g. IP based network is down, the functional application is not capable of receiving any information for its needs. As a result, the user gets very unsatisfied user-experience. Another drawback is that by using the typical mode of data transfer of a functional application i.e. the functional application connects to the application server and downloads data from there, it does not meet all security requirements for specific functional applications.

### SUMMARY OF THE INVENTION

An objective of the invention is to present a method and a user terminal for utilizing a message in a functional application sent from a functional application server to a terminal over a mobile communication network.

The objectives of the invention are achieved by transmitting the notification message from a functional application server to a terminal over mobile communication network by utilizing the predetermined message form in transmission.

A method according to the invention is characterised by the steps recited in the characterising part of the independent claim directed to a method.

A user terminal according to the invention is characterised by the features recited in the characterising part of the independent claim directed to a user terminal.

A system according to the invention is characterised by the features recited in the characterising part of the independent claim directed to a system.

According to an embodiment of the invention the terminal and the functional application in the terminal are capable of receiving a message over mobile communication network.

According to an embodiment the message is a SMS (Short Message Service) or as a MMS (Multimedia Messaging Service).

According to a further embodiment of the invention the structure of the received message is recognized and the content of the message is interpreted in the terminal. Based on the interpretation of the message the functionality or configuration of the functional application is instructed according to the content of the message.

According to some embodiments of the invention the message is transmitted as a so called invisible message for the user.

According to some further embodiments of the invention the message is interpreted in a smart card coupled to a user terminal and the smart card is arranged to give instructions relating to the functionality of the functional application.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF DRAWINGS

- Fig. 1: illustrates a prior art solution in the context of functional application,
- fig. 2: illustrates a principle according to an embodiment of the invention,
- fig. 3: illustrates a method according to an embodiment of the invention, and
- fig. 4: illustrates a block diagram of a user terminal according to an invention.

### DETAILED DESCRIPTION OF THE INVENTION AND ITS ADVANTAGEOUS EMBODIMENTS

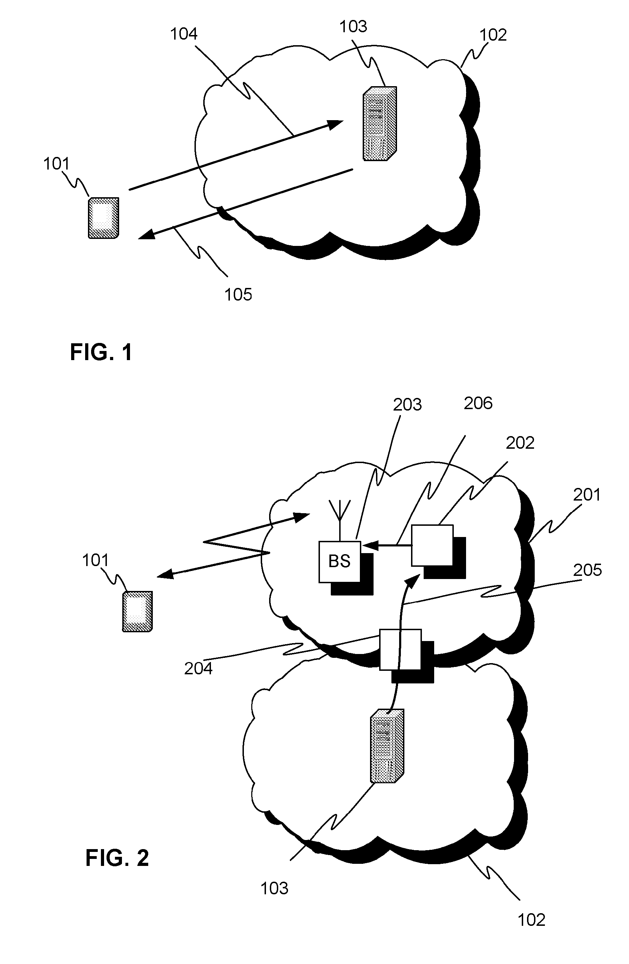

Figure 1 illustrates a traditional arrangement for functional applications where the functional application residing in a user terminal 101 sends a request 104 for data over IP (Internet Protocol) network 102. The functional application server 103 locating in the IP network 102 receives the request 104 and in response 105 to the request transmits the required data to the user terminal 101. The user of the terminal gets the required service, e.g. he or she can read news headlines from his or her terminal as long as there is IP network available. In the prior art solution the transmission of the data specifically originates from the request of the functional application residing in the terminal.

Figure 2 illustrates an embodiment according to the invention where the functional application server 103 sends a message to the functional application residing in the user terminal. In a method according to the invention the functional application server 103 establishes a connection to client by pushing the data without client pull- request using non-IP connection like a connection over 2G or 3G or 4G network. In other words, the functional application server 103 is configured to send a message over a mobile communication network 201. The functional application server 103, locating in IP network 102, is capable of composing a predetermined message form, such as a SMS or a MMS, for mobile communication network 103.

With the term of predetermined message form it is meant any such message, which can be sent over a mobile communication network. Examples of such message forms are short messages (SMS) and multimedia messages (MMS), which are defined in a corresponding telecommunication standard. After composing the message the functional application server is configured to send the message either directly or indirectly over mobile communication network. If the functional application server is capable of sending the message directly, it comprises typical radio access means, such as a radio modem, for being connected to the mobile network directly and utilizing the radio resources there. If the functional application server 103 is configured to send the message indirectly, the functional application server is connected to a first network, such as IP network 102, which is further interworking with a mobile communication network 201. Thus, the server is configured to compose a message and deliver it to the first network, such as IP network, which delivers the message 205 further to the mobile communication network. The mobile communication network 201 delivers the message from the core network elements 202 via radio network elements, e.g. a base station 203, to the user terminal 101. If needed, for example, the interworking element 204 between said first network 102 and the mobile communication network 103 is arranged to modify the message so that it complies with the requirements in mobile communication network. In Figure 2 it is illustrated some network elements in the mobile communication network, such as a base station 203 and some core network element 202 enabling the transmission of a message from the functional application server 103 to the user terminal 101 at least partly over a mobile communication network 201. It is noted here that Figure 2 does not comprise all necessary elements in either of the networks 102, 201 to accomplish the transmission of a message.

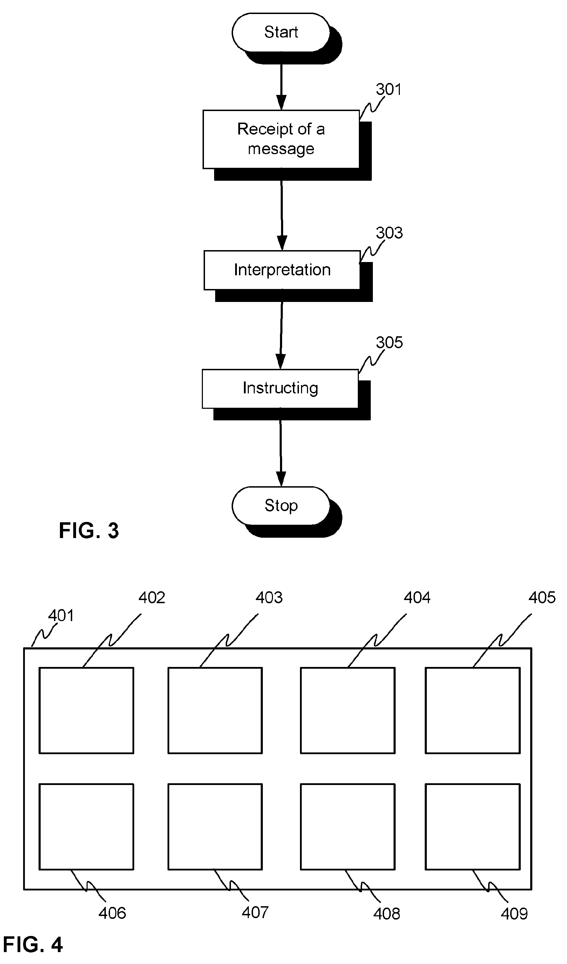

Figure 3 illustrates a simplified flow chart of the method according to the invention. In the first step the message sent by the functional application server over mobile communication network is received. The receipt of the message 301 is done by means of radio communication means implemented in the user terminal. In the next step of the method according to the invention the data in the received message is interpreted 303. The interpretation may comprise e.g. recognizing the structure of the message i.e. if there is a specific structure in the message so that it can be recognized on the basis of the structure that the message contains data dedicated to the functional application. Furthermore, the interpretation comprises a way to analyze the data so that on the basis of the data an instruction can be given to the functional application 305, as disclosed in the method step in Figure 3. The instruction is typically related to a functionality of the functional application.

The instruction related to the functionality of the functional application in this context shall be understood as a data dedicated to the functional application and delivered further to the user. Alternatively or in addition, the instruction shall be understood as a data related to configure and / or update the functional application itself.

Functional applications residing in the memory of a user terminal and run by means of processing means of the user terminal may receive multiple types of messages from the functional application server. According to some embodiment of the invention the message may relate to the desires of the user of the terminal, i.e. being content for the application such as news headline, or it can relate to the application itself. The application related message can be e.g. an update data for updating the application or configuration data for configurating application to operate in a desired manner. It can be that any of these types of messages can be so called structured or un-structured message.

Structured message means that it is agreed in advance, in which form the message is composed. For example paragraphs in the message are ordered in a specified sequence, each paragraph can be characterized by identifier and containing information in free form. Furthermore, many times structured message is composed so that the message is not understandable by the user. Additionally, the message can be encrypted according to the requirement of provided service.

Instead, an un-structured message means that there are no pre-determined identifiers for the data, so data can be in any order, e.g. plain text message or even an executable file are examples about the unstructured messages. Such unstructured messages may contain visible and invisible parts to the user.

According to some embodiments of the invention the message is delivered as a structured message to the functional application residing in the user terminal. According to some other embodiments of the invention the message is delivered as an un-structured message to said functional application. According some further embodiments of the invention some specific messages are delivered in a structured form and some other specific messages are delivered in an un-structured form. For example, an update data for the functional application is delivered in structured form, but the functional data dedicated to the user, e.g. news headlines, is delivered in un-structured manner. By means of this sort of arrangement the security of the operation of the functional application can be managed. The functional application residing in the user terminal is configured to recognize if the data received is structured or un-structured and based on the recognition utilize the data accordingly. The recognition can be arranged with software to be run in processing means of the terminal.

Supplementary functions are applied if the characteristics of services require advanced implementations. For example, such features are utilizing the location info of users and retrieval of user profile data for further modifying the functional application based service. User profiles also contain added parameters which are available for developing services in large variety of implementations.

For instance, location sensitive functional applications may provide directory info about surrounding commercial services, traffic info, weather forecast etc. Profiles may contain the preferred services subscribers wish to use. Moreover, the user profile may contain information on the desired communication channel. For example, a certain functional application may operate in a so called normal manner i.e. utilizing the typical client - server architecture until a predetermined event, e.g. relating to information received from the server. In such a situation the functional application is configured to check further instructions from a user profile, which instructions indicate that the typical client-server operation is to be stopped. Furthermore, the instruction in the user profile may further define that after a predetermined period of time of non-operating client - service operation, a pre-determined message, such as SMS, is sent over a mobile communication network to the terminal and thus to the functional application residing in the terminal. The predetermined message may e.g. update the functional application or function of it and / or contain information to be displayed to the user of the mobile terminal.

According to an embodiment of the invention a message relating to a functional application in a mobile terminal is sent to a user terminal over mobile communication network, which terminal is configured to receive the message. The message is sent by a functional application server. The message is transmitted over the mobile communication network with a predetermined message type such as a short message (SMS) or as a multimedia message (MMS) which are also so called standardized message types within some mobile communication technologies.

Depending on the functional application type and/or its requirements the sophisticated classes of the mentioned predetermined message forms can be used. For example, for a short message service (SMS) it is developed the following alternative message classes to be used in the mobile communication network:
Class 0: Indicates that this message is to be displayed on the mobile terminal immediately and a message delivery report is to be sent back to the short message service centre. The message does not have to be saved in the mobile terminal or on the subscriber identity module (SIM) card (unless selected to do so by the mobile user).
Class 1: Indicates that this message is to be stored in the memory of the mobile terminal or the SIM card (depending on memory availability).
Class 2: This message class is Phase 2 specific and carries SIM card data. The SIM card data must be successfully transferred prior to sending acknowledgement to the short message service centre. An error message will be sent to the short message service centre if this transmission is not possible.
Class 3: Indicates that this message will be forwarded from the receiving entity to an external device. The delivery acknowledgement will be sent to the short message service centre regardless of whether or not the message was forwarded to the external device.

The mentioned classes above identify the message's importance as well as the location in the user terminal (with UICC; Universal Integrated Circuit Card) where the message shall be stored. For example, in many occasions the mentioned class 1 is advantageous for functional applications in the mobile terminal due to its character that the message is stored in the memory of the user terminal or UICC card. In some examples of the method of the invention the functional application is configured to recognize the storing of the message and retrieve the data in the message from the corresponding memory element.

In case of a receipt of a structured message, it is preferred that the message is invisible to the user. The reason is that if a user of the terminal receives and reads a message that he or she does not understand, he or she may delete the message immediately even if it is dedicated to the functional application and not to the user as such. Generally speaking, a receipt of messages dedicated to a functional application is advantageously not recognizable by the user.

Similarly, multimedia message (MMS) standard has different message classes which enable different type of transmission of messages to the functional application residing in the user terminal.

Utilization of multimedia message in the context of the current invention enables even a wider range of information delivery to the functional application. For example, the functional application in the mobile terminal is a video greeting application i.e. several users, like friends, have agreed that they can send video greetings to each others through a dedicated functional application in their mobile terminals. In an embodiment of the invention the light-weight video greeting is sent with a multimedia message from a first terminal to a second terminal. Due to some desired additional effects, which the functional application can add to the message content, it is advantageous that the functional application recognizes that a multimedia message relating to that specific functional application is received in the mobile terminal. The functional application is configured to interpret the content of the message, e.g. in this case the video greeting data and additionally some header data when available. As a result of the interpretation of the received multimedia message the functionality of the functional application is instructed i.e. the video greeting is shown immediately in the functional application residing in the mobile terminal.

According to some embodiments of the invention UICC (Universal Integrated Circuit Card) is utilized in the context of delivering information to a functional application in the mobile terminal over mobile telecommunication network. In such embodiments the received message is directed to an application stored in UICC which extracts the necessary information from the received message and based on the extracted information controls the functional application in the mobile terminal. The controlling in this context comprises that UICC applications send at least part of the content of the received message to the functional application located in the mobile terminal. Alternatively or in addition, the UICC application may modify at least part of the content and / or other information received in the form of the message, and then delivers the at least partly modified content and / or other information to the functional application in the mobile terminal. For example, in some functional applications it is advantageous to have very high security level of the message. For such a need the telecom operator may offer higher encryption and thus higher level of security by offering the utilization of the features of UICC card, which is an entity fully managed and controlled by the telecom operator and into which one can store additional applications. Thus for example, all security related issues can be solved through an application residing in the UICC, which application is further configured to deliver the necessary information included in the received message and dedicated to the functional application residing in the memory of the user terminal and run with the processing means of the user terminal. Additionally, according to some other embodiments of the invention the whole functional application is implemented in the UICC card. The functional application is stored in the memory of the UICC and the application is run in the UICC card by means of processing means in the UICC card. Only the output devices in the user terminal, such as displaying means, audio means and/or means for creating sensing effects, like vibration, are utilized for outputting the functional application information if applicable.

The above described functional applications implemented in an UICC card can advantageously be utilized in such services, which require high security. Such services can relate to banking, ticketing and/or access control. For example, so called near field communication (NFC) based access control systems may utilize the inventive idea described in such a manner that if the access application is a so called functional application residing in the UICC card of a mobile terminal, any updates relating to access code are advantageously implemented by means of predetermined message over a mobile communication network.

A user terminal 401 according to an embodiment of the current invention is illustrated in Figure 4. The user terminal comprises memory means 402 for storing data, processing means 403 for processing the stored data, radio communication means 404 for communicating with a network wirelessly and I/O means 405 for inputting and outputting data. Moreover, the user terminal 401 comprises interfaces for making the different means in the terminal to interoperate with each other. The user terminal 401 according to the invention comprises further means which are configured to receive a message containing data dedicated to a functional application and transmitted at least partly over a mobile communication network in a predetermined message form, means for interpreting 406 the data in the message, and means for instructing 407 a functionality of the functional application on a basis of the data in the message. According to an embodiment of the invention the interpretation of the message and instructing of the functional application are implemented by means of software code run on processing means 403 of the user terminal. According to some other embodiments of the invention the user terminal comprises interfacing means 408 for coupling a smart card 409, such as SIM or UICC, into it and utilizing the smart card 409 resources in interpretation of a received message and instructing the functionality of the functional application.

In some embodiments of the invention the functional application server is configured to send at least part of the data with a predetermined message over a mobile communication network. For example, part of the data dedicated to the functional application is delivered over an IP network and a part of the data is delivered with a predetermined message over a mobile communication network. In such an embodiment the trigger for data delivery over IP network comes from the functional application server. The server is configured to select part of the data, which is to be included into the predetermined message to be sent over a mobile communication network. The sending of a message over the mobile communication network triggers another delivery of data over an IP network. The data received is combined in the functional application residing in the user terminal.

In some examples of the invention the triggering for sending a message by a functional application server comes from an agreement between the user of the terminal and the service provider. In some other examples of the invention the triggering is set by the service provider only, e.g. in security related functional applications. The invention itself does not prevent any other ground for triggering, but is merely open to any similar implementation.

In a system according to an invention of delivering data dedicated to a functional application the system is configured to transmit a message containing data dedicated to a functional application at least partly over a mobile communication network in a predetermined message form. The the data in the message is configured to be interpreted by the system and a functionality of the functional application is configured to be instructed on a basis of the data in the message.

Above it is described several communication methods in the context of functional applications. It is generally known that a user terminal may comprise technologies for connecting the terminal to one or multiple network(s). Examples of such technologies can be 3G (3^{rd} Generation) and/or GSM (Global System for Mobile Communications) chips for connecting the terminal to mobile communication networks generally available or WLAN (Wireless Local Area Network) chip for connecting the terminal directly to the wireless local area network. The user terminal can be for example a mobile phone, a tablet device or a laptop computer. In some context one can even count a personal computer (PC) as a mobile terminal, if the connection is arranged wirelessly into the network. This can be achieved e.g. by a wireless modem connected to an USB port of the PC and utilizing at least partly mobile communication network as is the case with other type of mobile terminals too.

## Claims

1. A method of delivering data dedicated to a functional application residing in a user terminal, whereby the method comprises the following steps
- receiving (301), by the functional application residing in the user terminal, a message composed by an application server and containing data dedicated to a functional application and transmitted at least partly over a mobile communication network,
- interpreting (303), by the functional application residing in the user terminal, the received message, the interpretation comprising:
- recognizing on a basis of a structure of the message composed by an application server if the data in the message comprises content for the functional application or a functional application related data wherein the recognition is arranged so that when the message is composed in a structured form the message comprises the functional application related data and when the message is composed in an un-structured form the message comprises content for the functional application and wherein the message composed in the structured form is configured to be recognized by detecting paragraph identifiers from the message in a specified sequence, and
- analysing the data in the message,
and
- instructing (305) a functionality of the functional application on a basis of the structure of the message and the analysed data.

2. The method according to the claim 1, **characterized in that** the interpretation of the message is at least partly performed in the functional application residing in a smart card coupled in a user terminal.

3. The method according to any of the preceding claims, **characterized in that** the message is set as invisible message.

4. A user terminal (101, 401), comprising:
- memory means (402) for storing data,
- processing means (403) for processing the stored data,
- radio communication means (404) for communicating with a network,
- input and output means (405) for inputting and outputting data, whereby the user terminal is further configured to
- receive (301), by the functional application residing in the user terminal, a message composed by an application server and containing data dedicated to a functional application and transmitted at least partly over a mobile communication network,
- interpret (303), by the functional application residing in the user terminal, the received message, the interpretation comprising:
- recognizing on a basis of a structure of the message composed by an application server if the data in the message comprises content for the functional application or a functional application related data wherein the recognition is arranged so that when the message is composed in a structured form the message comprises the functional application related data and when the message is composed in an un-structured form the message comprises content for the functional application and wherein the message composed in the structured form is configured to be recognized by detecting paragraph identifiers from the message in a specified sequence, and
- analysing the data in the message,
and
- instruct (305) a functionality of the functional application on a basis of the structure of the message and the analysed data.

5. The user terminal according to claim 4, **characterized in that** a smart card is coupled into the user terminal for storing the functional application.

6. The user terminal according to any of the claims 4 or 5, **characterized in that** the message is set as invisible message.

7. A system of delivering data dedicated to a functional application residing in a user terminal within the system, whereby in the system a message composed by an application server and containing data dedicated to a functional application, said message being configured to be transmitted at least partly over a mobile communication network, and whereby the message is configured to be interpreted by
- recognizing on a basis of a structure of the message composed by an application server if the data in the message comprises content for the functional application or a functional application related data wherein the recognition is arranged so that wherein the message is composed in a structured form the message comprises the functional application related data and wherein the message is composed in an un-structured form the message comprises content for the functional application and wherein the message composed in the structured form is configured to be recognized by detecting paragraph identifiers from the message in a specified sequence, and
- means fort analysing the data in the message,
- means for instructing a functionality of the functional application on the basis of the structure of the message and the analysed data.

## Patentansprüche

1. Verfahren zum Liefern von Daten, die einer Funktionsanwendung zugeordnet sind, die sich in einem Teilnehmergerät befindet, wodurch das Verfahren die folgenden Schritte umfasst:
- Empfangen (301), durch die sich im Teilnehmergerät befindliche Funktionsanwendung, einer Nachricht, die durch einen Anwendungsserver zusammengestellt wird und Daten enthält, die einer Funktionsanwendung zugeordnet sind und zumindest teilweise über ein Mobilkommunikationsnetz übertragen werden,
- Interpretieren (303), durch die in dem Teilnehmergerät befindliche Funktionsanwendung, der empfangenen Nachricht, wobei die Interpretation Folgendes umfasst:
- Erkennen, auf einer Basis einer Struktur der durch einen Anwendungsserver zusammengestellten Nachricht, ob die Daten in der Nachricht Inhalt für die Funktionsanwendung oder eine Funktionsanwendung betreffende Daten umfassen, wobei die Erkennung so ausgelegt ist, dass, wenn die Nachricht in einer strukturierten Form zusammengestellt ist, die Nachricht die eine Funktionsanwendung betreffenden Daten umfasst, und, wenn die Nachricht in einer unstrukturierten Form zusammengestellt ist, die Nachricht Inhalt für die Funktionsanwendung umfasst, und wobei die in der strukturierten Form zusammengestellte Nachricht konfiguriert ist, durch Detektieren von Paragraphkennungen in der Nachricht in einer spezifizierten Sequenz erkannt zu werden, und
- Analysieren der Daten in der Nachricht,
und
- Anweisen (305) einer Funktionalität der Funktionsanwendung auf einer Basis der Struktur der Nachricht und der analysierten Daten.

2. Verfahren nach Anspruch 1, **dadurch gekennzeichnet, dass** die Interpretation der Nachricht mindestens teilweise in der Funktionsanwendung durchgeführt wird, die sich in einer Smartcard befindet, die in einem Teilnehmergerät gekoppelt ist.

3. Verfahren nach einem der vorhergehenden Ansprüche, **dadurch gekennzeichnet, dass** die Nachricht als eine unsichtbare Nachricht eingestellt ist.

4. Teilnehmergerät (101, 401), das Folgendes umfasst:
- Speichermittel (402) zum Speichern von Daten,
- Verarbeitungsmittel (403) zum Verarbeiten der gespeicherten Daten,
- Funkkommunikationsmittel (404) zum Kommunizieren mit einem Netzwerk,
- Eingabe- und Ausgabemittel (405) zum Eingeben und Ausgeben von Daten, wodurch das Teilnehmergerät weiterhin konfiguriert ist zum
- Empfangen (301), durch die sich im Teilnehmergerät befindliche Funktionsanwendung, einer Nachricht, die durch einen Anwendungsserver zusammengestellt wird und Daten enthält, die einer Funktionsanwendung zugeordnet sind und zumindest teilweise über ein Mobilkommunikationsnetz übertragen werden,
- Interpretieren (303), durch die in dem Teilnehmergerät befindliche Funktionsanwendung, der empfangenen Nachricht, wobei die Interpretation Folgendes umfasst:
- Erkennen, auf einer Basis einer Struktur der durch einen Anwendungsserver zusammengestellten Nachricht, ob die Daten in der Nachricht Inhalt für die Funktionsanwendung oder eine Funktionsanwendung betreffende Daten umfassen, wobei die Erkennung so ausgelegt ist, dass, wenn die Nachricht in einer strukturierten Form zusammengestellt ist, die Nachricht die eine Funktionsanwendung betreffenden Daten umfasst, und, wenn die Nachricht in einer unstrukturierten Form zusammengestellt ist, die Nachricht Inhalt für die Funktionsanwendung umfasst, und wobei die in der strukturierten Form zusammengestellte Nachricht konfiguriert ist, durch Detektieren von Paragraphkennungen in der Nachricht in einer spezifizierten Sequenz erkannt zu werden, und
- Analysieren der Daten in der Nachricht,
und
- Anweisen (305) einer Funktionalität der Funktionsanwendung auf einer Basis der Struktur der Nachricht und der analysierten Daten.

5. Teilnehmergerät nach Anspruch 4, **dadurch gekennzeichnet, dass** eine Smartcard in das Teilnehmergerät gekoppelt ist zum Speichern der Funktionsanwendung.

6. Teilnehmergerät nach einem der Ansprüche 4 oder 5, **dadurch gekennzeichnet, dass** die Nachricht als eine unsichtbare Nachricht eingestellt ist.

7. System zum Liefern von Daten, die einer in einem Teilnehmergerät befindlichen Funktionsanwendung zugeordnet sind, wodurch in dem System
eine Nachricht, die durch einen Anwendungsserver zusammengestellt wird und Daten enthält, die einer Funktionsanwendung zugeordnet sind, wobei die Nachricht konfiguriert ist, mindestens teilweise über ein Mobilkommunikationsnetzwerk übertragen zu werden,
und wodurch die Nachricht konfiguriert ist interpretiert zu werden durch
- Erkennen, auf einer Basis einer Struktur der durch einen Anwendungsserver zusammengestellten Nachricht, ob die Daten in der Nachricht Inhalt für die Funktionsanwendung oder eine Funktionsanwendung betreffende Daten umfassen, wobei die Erkennung so ausgelegt ist, dass, wobei die Nachricht in einer strukturierten Form zusammengestellt ist, die Nachricht die eine Funktionsanwendung betreffenden Daten umfasst, und wobei die Nachricht in einer unstrukturierten Form zusammengestellt ist, die Nachricht Inhalt für die Funktionsanwendung umfasst, und wobei die in der strukturierten Form zusammengestellte Nachricht konfiguriert ist, durch Detektieren von Paragraphkennungen in der Nachricht in einer spezifizierten Sequenz erkannt zu werden, und
- Mittel zum Analysieren der Daten in der Nachricht,
- Mittel zum Anweisen einer Funktionalität der Funktionsanwendung auf der Basis der Struktur der Nachricht und der analysierten Daten.

## Revendications

1. Procédé de délivrance de données dédiées à une application fonctionnelle se trouvant dans un terminal utilisateur, le procédé comprenant les étapes suivantes :
- la réception (301), par l'application fonctionnelle se trouvant dans le terminal utilisateur, d'un message composé par un serveur d'application et contenant des données dédiées à une application fonctionnelle et transmises au moins en partie sur un réseau de communication mobile,
- l'interprétation (303), par l'application fonctionnelle se trouvant dans le terminal utilisateur, du message reçu, l'interprétation comprenant :
- la reconnaissance, sur la base de la structure du message composé par un serveur d'application, de ce que les données dans le message comprennent un contenu destiné à l'application fonctionnelle ou des données liées à une application fonctionnelle, la reconnaissance étant agencée de telle sorte que, lorsque le message est composé dans une forme structurée, le message comprend les données liées à l'application fonctionnelle, et lorsque le message est composé dans une forme non structurée, le message comprend un contenu pour l'application fonctionnelle, et où le message composé dans la forme structurée est configuré pour être reconnu en détectant des identificateurs de paragraphes à partir du message dans une séquence spécifiée, et
- l'analyse des données dans le message,
et
- l'instruction (305) d'une fonctionnalité de l'application fonctionnelle sur la base de la structure du message et des données analysées.

2. Procédé selon la revendication 1, **caractérisé en ce que** l'interprétation du message est effectuée au moins partiellement dans l'application fonctionnelle se trouvant dans une carte intelligente couplée dans un terminal utilisateur.

3. Procédé selon l'une quelconque des revendications précédentes, **caractérisé en ce que** le message est établi comme étant un message invisible.

4. Terminal utilisateur (101, 401), comprenant :
- un moyen formant mémoire (402) permettant de stocker des données,
- un moyen de traitement (403) permettant de traiter les données stockées,
- un moyen de radiocommunication (404) permettant de communiquer avec un réseau,
- un moyen d'entrée et de sortie (405) permettant de recevoir en entrée et d'émettre en sortie des données, le terminal utilisateur étant en outre configuré pour :
- recevoir (301), grâce à l'application fonctionnelle se trouvant dans le terminal utilisateur, un message composé par un serveur d'application et contenant des données dédiées à une application fonctionnelle et transmises au moins en partie sur un réseau de communication mobile,
- interpréter (303), grâce à l'application fonctionnelle se trouvant dans le terminal utilisateur, le message reçu, l'interprétation comprenant :
- la reconnaissance, sur la base de la structure du message composé par un serveur d'application, de ce que les données dans le message comprennent un contenu destiné à l'application fonctionnelle ou des données liées à une application fonctionnelle, la reconnaissance étant agencée de telle sorte que, lorsque le message est composé dans une forme structurée, le message comprend les données liées à l'application fonctionnelle, et lorsque le message est composé dans une forme non structurée, le message comprend un contenu pour l'application fonctionnelle, et le message composé dans la forme structurée étant configuré pour être reconnu en détectant des identificateurs de paragraphes à partir du message dans une séquence spécifiée, et
- l'analyse des données dans le message,
et
- l'instruction (305) d'une fonctionnalité de l'application fonctionnelle sur la base de la structure du message et des données analysées.

5. Terminal utilisateur selon la revendication 4, **caractérisé en ce qu'**une carte intelligente est couplée dans le terminal utilisateur afin de stocker l'application fonctionnelle.

6. Terminal utilisateur selon l'une quelconque des revendications 4 ou 5, **caractérisé en ce que** le message est établi comme étant un message invisible.

7. Système de délivrance de données dédiées à une application fonctionnelle se trouvant dans un terminal utilisateur à l'intérieur du système, dans le système, un message composé par un serveur d'application et contenant des données dédiées à une application fonctionnelle, ledit message étant configuré pour être transmis au moins partiellement sur un réseau de communication mobile,
et le message étant configuré pour être interprété grâce à :
- la reconnaissance, sur la base de la structure du message composé par un serveur d'application, de ce que les données dans le message comprennent un contenu destiné à l'application fonctionnelle ou des données liées à une application fonctionnelle, la reconnaissance étant agencée de telle sorte que, dans lequel le message est composé dans une forme structurée, le message comprend les données liées à l'application fonctionnelle, et dans lequel le message est composé dans une forme non structurée, le message comprend un contenu pour l'application fonctionnelle, et le message composé dans la forme structurée étant configuré pour être reconnu en détectant des identificateurs de paragraphes à partir du message dans une séquence spécifiée, et
- un moyen permettant l'analyse des données dans le message,
- un moyen permettant l'instruction d'une fonctionnalité de l'application fonctionnelle sur la base de la structure du message et des données analysées.
